# EUROPÄISCHE PATENTSCHRIFT

(11) **EP 2 159 418 B1**
(45) Veröffentlichungstag und Bekanntmachung des Hinweises auf die Patenterteilung: **23.10.2013**
(21) Anmeldenummer: 09001357.4
(22) Anmeldetag: 31.01.2009
(51) Int. Cl.: F03D 7/04

(54) **Verfahren zum Betreiben einer Windenergieanlage mit einer Windgeschwindigkeitsmesseinrichtung**
Method for operating a wind farm with a wind speed measurement device
Procédé de fonctionnement d'une éolienne dotée d'un dispositif de mesure de la vitesse du vent

(30) Priorität: 27.08.2008 DE 102008044652
(43) Veröffentlichungstag der Anmeldung: 03.03.2010
(73) Patentinhaber: Nordex Energy GmbH, 22419 Hamburg (DE)
(72) Erfinder: Bilges, Sören, 27283 Verden (DE); Schwarze, Holger, 22763 Hamburg (DE)
(74) Vertreter: Hauck Patent- und Rechtsanwälte

(56) Entgegenhaltungen:
- EP-A2- 0 913 746
- EP-A2- 1 906 192
- DE-A1-102004 051 843
- GB-A- 2 023 237
- US-A1- 2005 276 696

## Beschreibung

Die Erfindung betrifft ein Verfahren zum Betreiben einer Windenergieanlage mit einer Windgeschwindigkeitsmesseinrichtung sowie eine derartige Windenergieanlage.

Beim Betrieb von Windenergieanlagen ist die Windgeschwindigkeit eine Messgröße mit zentralem Einfluss auf das Leistungsvermögen, die möglichen Betriebs- und Regelungsarten und die auftretenden Belastungen der Windenergieanlage. Entsprechend wichtig ist eine zuverlässige und genaue Messung der Windgeschwindigkeit. Es kommen unterschiedliche Windgeschwindigkeitsmesseinrichtungen, die auch als Anemometer bezeichnet werden, zum Einsatz. Zumeist sind sie auf der Gondel der Windenergieanlage angeordnet. Ein Problem, das grundsätzlich alle Windgeschwindigkeitsmesseinrichtungen betreffen kann, besteht in der Überwachung des Messbetriebs, d. h. darin, eine Fehlfunktion der Windgeschwindigkeitsmesseinrichtung zu erkennen. Zu fehlerhaften Messergebnissen kann es beispielsweise infolge von Witterungseinflüssen kommen, etwa durch Vereisung von Teilen der Messeinrichtung oder sonstige Verunreinigungen. Die diesbezüglich für eine Zertifizierung von der Windgeschwindigkeitsmesseinrichtung zu erfüllenden Anforderungen sind in der "Richtlinie für die Zertifizierung von Windenergieanlagen" des Germanischen Lloyd, Ausgabe 2003 mit Ergänzung 2004 in Kapitel 2, Abschnitt 2.3.2.4.2, niedergelegt.

Ausgehend von diesem Problem schlägt die Druckschrift DE 101 57 759 C1 vor, bei einer Windenergieanlage die gemessene Windgeschwindigkeit mit weiteren Betriebsparametern der Windenergieanlage zu korrelieren. Konkret wird überprüft, ob die von der Windenergieanlage erzeugte elektrische Leistung oder ein sich infolge der Regelung der Windenergieanlage ergebender Blattanstellwinkel in einem plausiblen Zusammenhang mit der gemessenen Windgeschwindigkeit steht. Ist dies nicht der Fall, wird auf einen Fehler des Anemometers geschlossen.

EP 1 906 192 A2 beschreibt ein Verfahren und eine Vorrichtung zur Auswertung von Sensoren und/oder zum Steuern des Betriebes einer Vorrichtung, die einen Sensor umfasst. Sowohl ein Anemometer als auch Sensoren zur Messung von Verlagerungen oder Belastungen oder anderen Größen werden beschrieben. Die Sensoren sind in unterschiedlichen Windenergieanlagen eines Windparks installiert.

DE 10 2004 051 843 A1 beschreibt eine Windenergieanlage und ein Verfahren zur automatischen Korrektur von Windfahnenfehleinstellungen. Mittels Messeinrichtungen werden Windparameter und eine elektromechanische Quantität ermittelt.

US 2005/0276696 A1 beschreibt ein Verfahren und eine Vorrichtung zur Detektion von Eis am Rotorblatt. Änderungen in der Beschleunigung des Rotorblattes oder des mechanischen und/oder elektrischen Moments werden durch Sensoren erfasst, um zu analysieren, ob eine Vereisung an den Rotorblättern vorliegt.

GB 20 23 237 A beschreibt eine Wind-Turbinen-Kontrolleinheit. In dieser Kontrolleinheit sind verschiedene Schleifen für die Größen Windgeschwindigkeit und Einstellwinkel bzw. Verstärkungsregelung gespeichert. Die Windgeschwindigkeit wird mit einem Sensor gemessen. Bei einer raschen Veränderung der Windgeschwindigkeit wird ein Offset für den Pitchwinkel erzeugt.

EP 0 913 746 A2 beschreibt ein System zur Auswertung von Sensordaten. Parameter wie Luftdruck-/ Luftdaten desselben Typs werden von mehreren redundanten Sensoren A, B, C erfasst und miteinander vergleichen.

Davon ausgehend ist es die Aufgabe der Erfindung, ein Verfahren zum Betreiben einer Windenergieanlage mit einer Windgeschwindigkeitsmesseinrichtung sowie eine derartige Windenergieanlage zur Verfügung zu stellen, das bzw. die eine verbesserte Plausibilitätskontrolle der gemessenen Windgeschwindigkeit ermöglicht.

Diese Aufgabe wird gelöst durch das Verfahren mit den Merkmalen des Anspruchs 1. Vorteilhafte Ausgestaltungen sind in den sich anschließenden Unteransprüchen angegeben.

Das erfindungsgemäße Verfahren dient zum Betreiben einer Windenergieanlage, die eine Windgeschwindigkeitsmesseinrichtung und eine Einrichtung zur Erfassung einer mechanischen Belastung aufweist, und umfasst die folgenden Schritte:
- Messen einer Windgeschwindigkeit mit der Windgeschwindigkeitsmesseinrichtung,
- Erfassen einer mechanischen Belastung mit der Einrichtung zur Erfassung einer mechanischen Belastung,
- Ermitteln eines Schätzwerts für die Windgeschwindigkeit ausgehend von der erfassten mechanischen Belastung,
- Vergleichen der mit der Windgeschwindigkeitsmesseinrichtung gemessenen Windgeschwindigkeit mit dem Schätzwert.

Es versteht sich, dass die angegebenen Schritte nicht zwingend in der obigen Reihenfolge ausgeführt werden müssen, insbesondere können die Messung der Windgeschwindigkeit und die Erfassung der mechanischen Belastung und Ermittlung des Schätzwerts parallel erfolgen.

Die Erfindung beruht auf der Erkenntnis, dass die beim Betrieb einer Windenergieanlage auftretenden mechanischen Belastungen einen bestimmten Zusammenhang zu der auf die Windenergieanlage einwirkenden Windgeschwindigkeit aufweisen, der für eine Plausibilitätskontrolle ausgewertet werden kann.

Die Einrichtung zur Erfassung einer mechanischen Belastung ist eine Messeinrichtung, die Aufschluss über die Größe einer mechanischen Belastung oder Beanspruchung der Windenergieanlage oder einer ihrer Komponenten liefert, beispielsweise durch Erfassung einer Verformung eines Bauteils mit einem Dehnungsmessstreifen oder durch Erfassung einer Bewegung mit einem Positions- oder Beschleunigungssensor. Die mechanische Belastung kann kontinuierlich über einen bestimmten Zeitraum oder fortlaufend erfasst oder abgetastet werden. Die mechanische Belastung kann an unterschiedlichen Komponenten der Windenergieanlage erfasst werden, etwa am Turm, in der Gondel oder an den Rotorblättern.

Ausgehend von der erfassten mechanischen Belastung wird ein Schätzwert für die Windgeschwindigkeit ermittelt. Dazu wird der bekannte bzw. im Vorfeld bestimmte Zusammenhang zwischen der mechanischen Belastung und der Windgeschwindigkeit ausgewertet. Die von der Windgeschwindigkeitsmesseinrichtung gemessene Windgeschwindigkeit bleibt bei der Ermittlung des Schätzwerts unberücksichtigt.

In einem weiteren Verfahrensschritt wird der Schätzwert mit dem Messwert für die Windgeschwindigkeit verglichen. Das Ergebnis des Vergleichs erlaubt Rückschlüsse auf die ordnungsgemäße Funktion der Windgeschwindigkeitsmesseinrichtung.

Die Erfindung ermöglicht die Ermittlung eines Schätzwerts für die Windgeschwindigkeit ausgehend von der Erfassung einer einzigen Messgröße für eine mechanische Belastung über den gesamten Arbeitsbereich der Windenergieanlage, d.h. über einen größeren Bereich von Windgeschwindigkeiten als mit bekannten Techniken, die insbesondere zwischen einem Betrieb unter Nennwind, bei dem die von der Windenergieanlage erzeugte elektrische Leistung ausgewertet wird, und einem Betrieb über Nennwind, bei dem der Pitchwinkel ausgewertet wird, unterschieden. Dabei ist die zweite Methode erst anwendbar, wenn die Pitchregelung eingreift. Dadurch kann sich bei Nennwind eine unter Umständen problematische Lücke der Plausibilitätsprüfung ergeben.

Weiterhin gewährleistet die Erfindung eine von der gemessenen Windgeschwindigkeit unabhängige Ermittlung des Schätzwerts. Insbesondere ist keine Unterscheidung zwischen einem Betrieb unter Nennwind von einem Betrieb über Nennwind erforderlich.

Die Erfindung kann daher eine zuverlässigere und von der zu überwachenden Windgeschwindigkeitsmessung unabhängige Plausibilitätskontrolle ermöglichen. Auch die Genauigkeit des Schätzwerts kann unter Umständen verbessert werden.

In einer Ausgestaltung ist die Einrichtung zur Erfassung einer mechanischen Belastung ein Beschleunigungssensor. Die mit dem Beschleunigungssensor an einem Punkt der Windenergieanlage erfasste Beschleunigung ist ein Maß für eine mechanische Belastung, denn die Beschleunigung hängt unmittelbar mit der in Folge der auf die Windenergieanlage einwirkenden Kräfte auftretenden Bewegung oder Verformung an dem Punkt der Windenergieanlage zusammen. Die Verwendung von Beschleunigungssensoren ist in Windenergieanlagen zur Schwingungsüberwachung bekannt, beispielsweise aus der Druckschrift DE 101 13 038 C2. Bei dieser bekannten Verwendung eines Beschleunigungssensors werden die Schwingungsfrequenzen und die Schwingungsamplituden in der Gondel der Windenergieanlage auf die Überschreitung eines vorgegebenen Grenzwerts hin überwacht, um eine Überbeanspruchung des Turms der Windenergieanlage zu vermeiden. Die Verwendung eines Beschleunigungssensors ermöglicht eine besonders genaue und zuverlässige Erfassung der mechanischen Belastung auch über längere Betriebszeiträume. Zudem verfügen moderne Windenergieanlagen häufig bereits über derartige Sensoren, so dass keine zusätzliche Erfassungseinrichtung zur Anwendung des erfindungsgemäßen Verfahrens erforderlich ist.

Bevorzugt ist der Beschleunigungssensor in der Gondel der Windenergieanlage angeordnet. Die in der Gondel gemessenen Beschleunigungen sind infolge der dort maximalen Schwingungsamplitude des Turms am größten und können daher besonders genau erfasst werden. Zudem wird die Gondel im Betrieb der Windenergieanlage stets nach der Windrichtung ausgerichtet, was die Erfassung einer eng mit der Windgeschwindigkeit korrelierten Beschleunigung vereinfacht.

In einer Ausgestaltung misst der Beschleunigungssensor die Beschleunigung senkrecht zur Rotorebene der Windenergieanlage. Dadurch wird die im Betrieb der Windenergieanlage in Windrichtung auftretende Beschleunigung (bei Windenergieanlagen mit horizontaler Rotorachse) erfasst, die am stärksten mit der Windgeschwindigkeit korreliert ist.

In einer weiteren Ausgestaltung umfasst das Ermitteln des Schätzwerts eine zeitliche Mittelung der erfassten Belastungswerte. Die Mittelung über einen geeigneten Zeitraum ist sinnvoll, um momentane Belastungen, die nicht mit der Windgeschwindigkeit bzw. der zur Abschaltung oder Überwachung maßgeblichen mittleren Windgeschwindigkeit eines längeren Zeitraums korreliert sind, etwa während einer Schwingungsbewegung auftretende Belastungsspitzen, herauszurechnen. Insbesondere kann ein gleitendes Zeitfenster für die Mittelung gewählt werden.

In einer weiteren Ausgestaltung umfasst das Ermitteln des Schätzwerts für die Windgeschwindigkeit die Berechnung einer Standardabweichung der in einem bestimmten Zeitintervall erfassten Belastungswerte, gegebenenfalls in einem gleitenden Bezugszeitraum. Die Berechnung der Standardabweichung erfolgt durch Bilden des geometrischen Mittels der quadratischen Abweichungen der Messwerte von einem Mittelwert. Versuche haben ergeben, dass die Standardabweichung der Messwerte für die erfasste mechanische Belastung eine hohe Korrelation zur Windgeschwindigkeit aufweist. Sie bietet daher einen besonders gut geeigneten Ausgangspunkt für die Ermittlung des Schätzwerts für die Windgeschwindigkeit.

In einer Ausgestaltung werden beim Ermitteln des Schätzwerts weitere Betriebs- oder Umgebungsparameter berücksichtigt. Dies können unter anderem die Luftdichte, der Typ der Windenergieanlage oder der Typ des verwendeten Turms der Windenergieanlage, die Anströmrichtung oder die am Standort der Windenergieanlage auftretenden Turbulenzintensitäten sein. Die genannten Parameter beeinflussen die bei einer bestimmten Windgeschwindigkeit auftretenden mechanischen Belastungen. So steigt die mechanische Belastung bei konstanter Windgeschwindigkeit beispielsweise mit der Luftdichte. Die rechnerische Berücksichtigung derartiger Zusammenhänge bei der Ermittlung des Schätzwerts führt zu einer höheren Genauigkeit des Schätzwerts.

Gemäß einer Ausgestaltung wird beim Ermitteln des Schätzwerts ein standortspezifischer und/oder anlagentypenspezifischer Zusammenhang zwischen Belastungswert und Windgeschwindigkeit verwendet. Dieser spezifische Zusammenhang kann insbesondere Einflussgrößen des Anlagentyps beinhalten, aber auch Besonderheiten des Standorts, etwa standortbedingte Turbulenzen der Luftströmung. Der spezifische Zusammenhang kann beispielsweise durch Simulationsrechnungen oder durch Messungen am Standort ermittelt werden. Bevorzugt werden zusätzlich zu dem standortspezifischen und/oder anlagentypenspezifischen Zusammenhang weitere veränderliche Umgebungsparametern, etwa die Luftdichte, berücksichtigt.

Gemäß einer Ausgestaltung wird für einen ermittelten Schätzwert ein Fehlerintervall ermittelt. Die Ermittlung eines Fehlerintervalls erlaubt eine einfache Bewertung der Abweichung des gemessenen Werts für die Windgeschwindigkeit vom Schätzwert. Alternativ kann das Fehlerintervall auch fest vorgegeben werden.

In einer Ausgestaltung hängt das ermittelte Fehlerintervall von weiteren Parametern ab. Es wird also zu jedem Schätzwert ein spezifisches Fehlerintervall festgelegt. Beispielsweise kann die Größe des Schätzwerts, der zeitliche Verlauf der ermittelten Schätzwerte oder die Konstanz der Windrichtung berücksichtigt werden. Dadurch kann die Schlussfolgerung auf eine Fehlfunktion der Windgeschwindigkeitsmesseinrichtung von der zu erwartenden Genauigkeit des ermittelten Schätzwerts abhängig gemacht werden. Unter für die Ermittlung des Schätzwerts günstigen Bedingungen kann bereits eine geringere Abweichung der gemessenen Windgeschwindigkeit als Messfehler identifiziert werden, während unter für die Ermittlung des Schätzwerts ungünstigen Bedingungen eine vorschnelle Schlussfolgerung auf einen Fehler der Windgeschwindigkeitsmesseinrichtung vermieden wird.

Gemäß einer weiteren Ausgestaltung wird eine Fehlermeldung ausgegeben und/oder die Betriebsführung der Windenergieanlage greift in den Betrieb der Anlage ein und/oder schaltet die Windenergieanlage ab, wenn eine Abweichung des Schätzwerts von der gemessenen Windgeschwindigkeit einen bestimmten Absolutbetrag überschreitet und/oder die gemessene Windgeschwindigkeit außerhalb des Fehlerintervalls liegt. Durch die Fehlermeldung kann beispielsweise ein Serviceeinsatz ausgelöst werden, der eine Wartung der Windgeschwindigkeitsmesseinrichtung umfasst.

Die obige Aufgabe wird ebenfalls gelöst durch die Windenergieanlage mit den Merkmalen des Anspruchs 12. Vorteilhafte Ausgestaltungen sind in den sich anschließenden Unteransprüchen angegeben. Die erfindungsgemäße Windenergieanlage hat
- eine Windgeschwindigkeitsmesseinrichtung,
- eine Einrichtung zur Erfassung einer mechanischen Belastung,
- eine Einrichtung zur Ermittlung eines Schätzwerts für die Windgeschwindigkeit ausgehend von der ermittelten mechanischen Belastung, und
- eine Vergleichseinrichtung, die die mit der Windgeschwindigkeitsmesseinrichtung gemessene Windgeschwindigkeit mit dem Schätzwert vergleichen kann.

Die erfindungsgemäße Windenergieanlage ist zur Ausführung des erfindungsgemäßen Verfahrens geeignet. Zu den Einzelheiten und bezüglich der Unteransprüche wird auf die Erläuterung des Verfahrens verwiesen.

Nachfolgend wird die Erfindung anhand eines in Figuren dargestellten Ausführungsbeispiels näher erläutert.

Es zeigen:
- Fig. 1:: eine erfindungsgemäße Windenergieanlage in vereinfachter, schematischer Darstellung, und
- Fig. 2:: ein Diagramm zum Zusammenhang zwischen Windgeschwindigkeit und mechanischer Belastung.

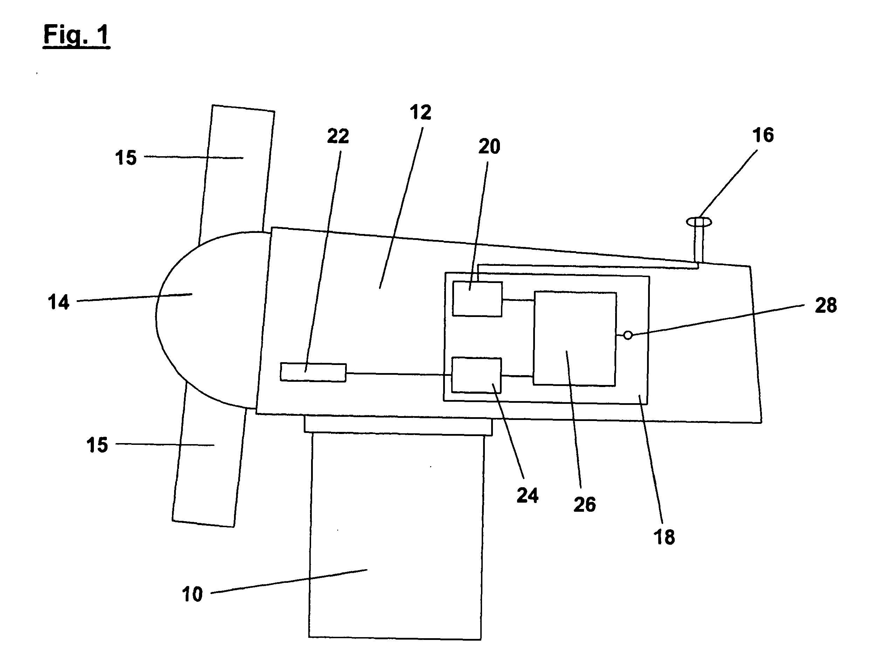

Die in der Figur 1 dargestellte Windenergieanlage weist einen Turm 10, eine Gondel 12 und einen Rotor 14 mit Rotorblättern 15 auf. Der Rotor 14 hat eine nicht dargestellte, horizontal angeordnete Achse und treibt zur Bereitstellung elektrischer Energie über ein nicht dargestelltes Getriebe einen ebenfalls nicht dargestellten Generator an. Die Windenergieanlage weist eine Windgeschwindigkeitsmesseinrichtung 16 in Form eines Anemometers auf. Das von der Windgeschwindigkeitsmesseinrichtung 16 erzeugte Signal wird an die Betriebsführung 18 der Windenergieanlage weitergeleitet und dort von einer Auswerteeinheit 20 ausgewertet.

Innerhalb der Gondel 12 der Windenergieanlage ist ein Beschleunigungssensor 22 angeordnet, der die Beschleunigung der Gondel 12 in im Wesentlichen senkrechter Richtung zu der von den Rotorblättern 15 definierten Ebene erfasst. Das Beschleunigungssignal des Beschleunigungssensors 22 wird an die Betriebsführung 18 weitergeleitet und dort durch die Einrichtung zur Ermittlung eines Schätzwerts 24 ausgewertet. Die Einrichtung zur Ermittlung eines Schätzwerts 24 berechnet zu diesem Zweck die Standardabweichung der erfassten Beschleunigungswerte über ein bestimmtes, gleitendes Zeitintervall von z.B. zehn Minuten Dauer. Unter Verwendung eines standortspezifischen Zusammenhangs zwischen den Beschleunigungswerten und der Windgeschwindigkeit, der in der Betriebsführung 18 hinterlegt ist, ordnet die Einrichtung zur Ermittlung eines Schätzwerts 24 der berechneten Standardabweichung der erfassten Beschleunigungswerte einen Schätzwert für die Windgeschwindigkeit zu.

Der Schätzwert für die Windgeschwindigkeit wird zur Plausibilitätskontrolle an die Vergleichseinrichtung 26 weitergeleitet und dort mit der ebenfalls an die Vergleichseinrichtung 26 weitergeleiteten, gemessenen Windgeschwindigkeit verglichen. Überschreitet die Abweichung zwischen dem Schätzwert und der gemessenen Windgeschwindigkeit einen vorgegebenen Wert bzw. liegt die gemessene Windgeschwindigkeit außerhalb eines vorgegebenen oder von der Einrichtung zur Ermittlung eines Schätzwerts 24 ermittelten Fehlerintervalls, gibt die Vergleichseinrichtung 26 eine Fehlermeldung aus, wie bei 28 angedeutet. Gegebenenfalls kann die Windenergieanlage daraufhin abgeschaltet werden.

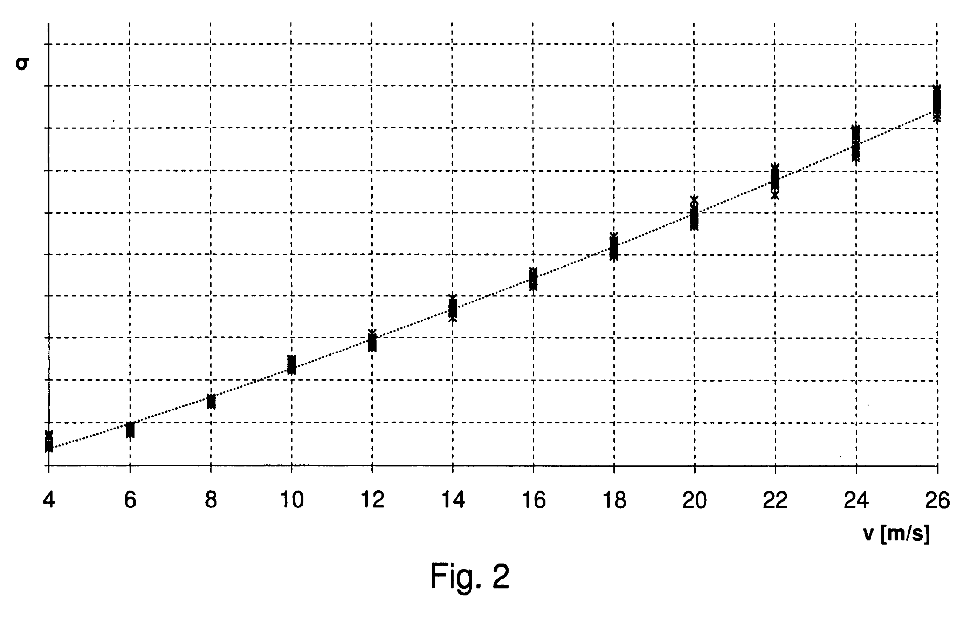

Figur 2 zeigt in einem Diagramm einen in einer Simulationsrechnung ermittelten Zusammenhang zwischen auf der Abszisse aufgetragenen 10-Minuten-Mittelwerten der Windgeschwindigkeit v und auf der Ordinate aufgetragenen Standardabweichungen σ der Beschleunigung der Gondel der Windenergieanlage für die entsprechenden Zeitintervalle. Es zeigt sich ein stetiger, monoton steigender Zusammenhang mit für jeden Mittelwert der Windgeschwindigkeit eng benachbarten, die Ergebnisse der die einzelnen Simulationsdurchgänge repräsentierenden Punkten für die Standardabweichung σ der Beschleunigung. Dies zeigt die starke Korrelation der beiden Größen, die eine zuverlässige und genaue Abschätzung der Windgeschwindigkeit auf Grundlage der in Form der Beschleunigungswerte erfassten mechanischen Belastung der Windenergieanlage ermöglicht. Es versteht sich, dass der für die Figur ausgewählte Windgeschwindigkeitsbereich, der der Simulationsrechnung zu Grunde lag, willkürlich ausgewählt ist und keine Beschränkung der Anwendbarkeit des Verfahrens bedeutet.

## Patentansprüche

1. Verfahren zum Betreiben einer Windenergieanlage, die eine Windgeschwindigkeitsmesseinrichtung (16) und eine Einrichtung zur Erfassung einer mechanischen Belastung aufweist, mit den folgenden Schritten:
• Messen einer Windgeschwindigkeit mit der Windgeschwindigkeitsmesseinrichtung (16),
• Erfassen einer mechanischen Belastung mit der Einrichtung zur Erfassung einer mechanischen Belastung, **gekennzeichnet durch** die weiteren Schritte:
• Ermitteln eines Schätzwerts für die Windgeschwindigkeit ausgehend von der ermittelten mechanischen Belastung,
• Vergleichen der mit der Windgeschwindigkeitsmesseinrichtung (16) gemessenen Windgeschwindigkeit mit dem Schätzwert.

2. Verfahren nach Anspruch 1, **dadurch gekennzeichnet, dass** die Einrichtung zur Erfassung einer mechanischen Belastung ein Beschleunigungssensor (22) ist.

3. Verfahren nach Anspruch 2, **dadurch gekennzeichnet, dass** der Beschleunigungssensor (22) in der Gondel (12) der Windenergieanlage angeordnet ist.

4. Verfahren nach Anspruch 2 oder 3, **dadurch gekennzeichnet, dass** der Beschleunigungssensor (22) die Beschleunigung senkrecht zur Rotorebene der Windenergieanlage misst.

5. Verfahren nach einem der Ansprüche 1 bis 4, **dadurch gekennzeichnet, dass** das Ermitteln des Schätzwerts eine zeitliche Mittelung der erfassten Belastungswerte umfasst.

6. Verfahren nach einem der Ansprüche 1 bis 5, **dadurch gekennzeichnet, dass** das Ermitteln des Schätzwerts die Berechnung einer Standardabweichung der erfassten Belastungswerte, gegebenenfalls in einem gleitenden Bezugszeitraum, umfasst.

7. Verfahren nach einem der Ansprüche 1 bis 6, **dadurch gekennzeichnet, dass** das Ermitteln des Schätzwerts weitere Betriebs- oder Umgebungsparameter berücksichtigt.

8. Verfahren nach einem der Ansprüche 1 bis 7, **dadurch gekennzeichnet, dass** das Ermitteln des Schätzwerts einen standortspezifischen und/oder anlagentypenspezifischen Zusammenhang zwischen Belastungswert und Windgeschwindigkeit verwendet.

9. Verfahren nach einem der Ansprüche 1 bis 8, **dadurch gekennzeichnet, dass** für einen ermittelten Schätzwert ein Fehlerintervall ermittelt wird.

10. Verfahren nach Anspruch 9, **dadurch gekennzeichnet, dass** das Fehlerintervall von weiteren Parametern abhängt.

11. Verfahren nach einem der Ansprüche 1 bis 10, **dadurch gekennzeichnet, dass** eine Fehlermeldung (28) ausgegeben wird und/oder die Betriebsführung (18) der Windenergieanlage in den Betrieb der Anlage eingreift und/oder die Windenergieanlage abschaltet, wenn eine Abweichung des Schätzwerts von der gemessenen Windgeschwindigkeit einen bestimmten Absolutbetrag überschreitet und/oder die gemessene Windgeschwindigkeit außerhalb des Fehlerintervalls liegt.

12. Windenergieanlage mit:
• einer Windgeschwindigkeitsmesseinrichtung (16),
• einer Einrichtung zur Erfassung einer mechanischen Belastung,
• einer Einrichtung zur Ermittlung eines Schätzwerts (24) für die Windgeschwindigkeit ausgehend von der ermittelten mechanischen Belastung, und
• einer Vergleichseinrichtung (26), die dazu ausgebildet ist, die mit der Windgeschwindigkeitsmesseinrichtung (16) gemessene Windgeschwindigkeit mit dem Schätzwert zu vergleichen.

13. Windenergieanlage nach Anspruch 12, **dadurch gekennzeichnet, dass** die Einrichtung zur Erfassung einer mechanischen Belastung ein Beschleunigungssensor (22) ist.

14. Windenergieanlage nach Anspruch 13, **dadurch gekennzeichnet, dass** der Beschleunigungssensor (22) in der Gondel (12) der Windenergieanlage angeordnet ist.

15. Windenergieanlage nach Anspruch 13 oder 14, **dadurch gekennzeichnet, dass** der Beschleunigungssensor (22) so angeordnet ist, dass er die Beschleunigung senkrecht zur Rotorebene der Windenergieanlage misst.

16. Windenergieanlage nach einem der Ansprüche 12 bis 15, **dadurch gekennzeichnet, dass** die Einrichtung zur Ermittlung des Schätzwerts (24) eine zeitliche Mittelung der erfassten Belastungswerte durchführen kann.

17. Windenergieanlage nach einem der Ansprüche 12 bis 16, **dadurch gekennzeichnet, dass** die Einrichtung zur Ermittlung des Schätzwerts (24) eine Standardabweichung der erfassten Belastungswerte berechnen kann, gegebenenfalls bezogen auf einen gleitenden Bezugszeitraum.

18. Windenergieanlage nach einem der Ansprüche 12 bis 17, **dadurch gekennzeichnet, dass** die Einrichtung zur Ermittlung des Schätzwerts (24) weitere Betriebs- oder Umgebungsparameter berücksichtigen kann.

19. Windenergieanlage nach einem der Ansprüche 12 bis 18, **dadurch gekennzeichnet, dass** in der Windenergieanlage ein standortspezifischer und/oder anlagentypenspezifischer Zusammenhang zwischen Belastungswert und Windgeschwindigkeit hinterlegt ist, der von der Einrichtung zur Ermittlung des Schätzwerts (24) verwendet werden kann.

20. Windenergieanlage nach einem der Ansprüche 12 bis 19, **dadurch gekennzeichnet, dass** die Einrichtung zur Ermittlung des Schätzwerts (24) eine Einrichtung zur Ermittlung eines Fehlerintervalls umfasst, die für einen ermittelten Schätzwert ein Fehlerintervall ermitteln kann.

21. Windenergieanlage nach Anspruch 20, **dadurch gekennzeichnet, dass** die Einrichtung zur Ermittlung des Fehlerintervalls weitere Parameter berücksichtigen kann.

22. Windenergieanlage nach einem der Ansprüche 12 bis 21, **dadurch gekennzeichnet, dass** die Vergleichseinrichtung (26) eine Fehlermeldung (28) ausgeben kann und/oder die Betriebsführung (18) der Windenergieanlage in den Betrieb der Anlage eingreifen kann und/oder die Windenergieanlage abgeschaltet werden kann, wenn die Vergleichseinrichtung (26) feststellt, dass eine Abweichung des Schätzwerts von der gemessenen Windgeschwindigkeit einen bestimmten Absolutbetrag überschreitet und/oder die gemessene Windgeschwindigkeit außerhalb des Fehlerintervalls liegt.

## Claims

1. A method for operating a wind turbine, which comprises a wind speed measurement device (16) and a device for detecting a mechanical load, comprising the following steps:
• measuring a wind speed with the wind speed measurement device (16),
• detecting a mechanical load using the device for detecting a mechanical load, **characterized by** the following steps:
• determining an estimated value for the wind speed, based on the detected mechanical load,
• comparing the wind speed measured by means of the wind speed measurement device (16) with the estimated value.

2. A method according to claim 1, **characterised in that** the device for detecting a mechanical load is an acceleration sensor (22).

3. A method according to claim 2, **characterised in that** the acceleration sensor (22) is arranged in the nacelle (12) of the wind turbine.

4. A method according to claim 2 or 3, **characterised in that** the acceleration sensor (22) measures the acceleration perpendicular to a rotor plane of the wind turbine.

5. A method according to one of claims 1 to 4, **characterised in that** the step of determining the estimated value comprises an averaging of the detected load values over time.

6. A method according to one of claims 1 to 5, **characterised in that** the step if determining the estimated value comprises calculating a standard deviation of the detected load values, if necessary in a moving reference time interval.

7. A method according to one of claims 1 to 6, **characterised in that** the step of determining the estimated value takes into account additional operating of environmental parameters.

8. A method according to one of claims 1 to 7, **characterised in that** the step of determining the estimated value uses an interrelationship between the load value and the wind speed which is specific for the location and/or for the type of wind turbine.

9. A method according to one of claims 1 to 8, **characterised in that** an error interval is determined for a determined estimated value.

10. A method according to claim 9, **characterised in that** the error interval depends on additional parameters.

11. A method according to one of claims 1 to 10, **characterised in that** an error message (28) is issued and/or the operational control (18) of the wind turbine intervenes in the operation of the wind turbine and/or shuts the wind turbine down, when a deviation of the estimated value from the measured wind speed exceeds a preset absolute value and/or the measured wind speed is outside of the error interval.

12. A wind turbine comprising:
• a wind speed measurement device (16),
• a device for detecting a mechanical load,
• a device for the determining an estimated value for the wind speed (24), based on the detected mechanical load, and
• a comparison device (26), which is configured to compare the wind speed measured by means of the wind speed measurement device (16) with the estimated value.

13. A wind turbine according to claim 12, **characterised in that** the device for detecting a mechanical load is an acceleration sensor (22).

14. A wind turbine according to claim 13, **characterised in that** the acceleration sensor (22) is arranged in the nacelle (12) of the wind turbine.

15. A wind turbine according to claim 13 or 14, **characterised in that** the acceleration sensor (22) is arranged in such a manner that it measures the acceleration perpendicular to a rotor plane of the wind turbine.

16. A wind turbine according to one of claims 12 to 15, **characterised in that** the device for determining the estimated value (24) is configured to perform an averaging of the detected load values over time.

17. A wind turbine according to one of claims 12 to 16, **characterised in that** the device for determining the estimated value (24) is configured to calculate a standard deviation of the detected load values, if necessary relating to a moving reference time interval.

18. A wind turbine according to one of claims 12 to 17, **characterised in that** the device for determining the estimated value (24) is configured to take additional operational and environmental parameters into account.

19. A wind turbine according to one of claims 12 to 18, **characterised in that** an interrelationship between load value and wind speed, which is specific for the location and/or for the type of the wind turbine, is stored in the wind turbine and can be used by the device for the determination of the estimated value (24).

20. A wind turbine according to one of claims 12 to 19, **characterised in that** the device for determining the estimated value (24) comprises a device for determining an error interval, configured to determine an error interval for a determined estimated value.

21. A wind turbine according to claim 20, **characterised in that** the device for determining an error interval is configured to take into account additional parameters.

22. A wind turbine according to one of claims 12 to 21, **characterised in that** the comparison device (26) is configured to issue an error message (28) and/or **in that** the operational control of the wind turbine is configured to intervene in the operation of the wind turbine and/or shut the wind turbine down, when the comparison device (26) determines that a deviation of the estimated value from the measured wind speed exceeds a preset absolute value and/or that the measured wind speed is outside of the error interval.

## Revendications

1. Procédé de fonctionnement d'une éolienne qui présente un dispositif de mesure de la vitesse du vent (16) et un dispositif de détection d'une contrainte mécanique, avec les étapes suivantes :
• mesure d'une vitesse du vent avec le dispositif de mesure de la vitesse du vent (16),
• détection d'une contrainte mécanique avec le dispositif de détection d'une contrainte mécanique, **caractérisé par** les autres étapes suivantes:
• détermination d'une valeur estimative de la vitesse du vent à partir de la contrainte mécanique déterminée,
• comparaison de la vitesse du vent, déterminée avec le dispositif de mesure de la vitesse du vent (16), avec la valeur estimative.

2. Procédé selon la revendication 1, **caractérisé en ce que** le dispositif de détection d'une contrainte mécanique est un capteur d'accélération (22).

3. Procédé selon la revendication 2, **caractérisé en ce que** le capteur d'accélération (22) est disposé dans la nacelle (12) de l'éolienne.

4. Procédé selon la revendication 2 ou 3, **caractérisé en ce que** le capteur d'accélération (22) mesure l'accélération perpendiculairement au plan de rotor de l'éolienne.

5. Procédé selon une des revendications 1 à 4, **caractérisé en ce que** la détermination de la valeur estimative comprend un calcul de la moyenne dans le temps des valeurs de contrainte détectées.

6. Procédé selon une des revendications 1 à 5, **caractérisé en ce que** la détermination de la valeur estimative comprend le calcul d'un écart type des valeurs de contrainte détectées, éventuellement dans une période de référence glissante.

7. Procédé selon une des revendications 1 à 6, **caractérisé en ce que** la détermination de la valeur estimative prend en compte d'autres paramètres de fonctionnement ou ambiants.

8. Procédé selon une des revendications 1 à 7, **caractérisé en ce que** la détermination de la valeur estimative utilise une relation, spécifique au lieu et/ou spécifique au type d'installation, entre la valeur de contrainte et la vitesse du vent.

9. Procédé selon une des revendications 1 à 8, **caractérisé en ce qu'**un intervalle de défauts est déterminé pour une valeur estimative déterminée.

10. Procédé selon la revendication 9, **caractérisé en ce que** l'intervalle de défauts est fonction de paramètres supplémentaires.

11. Procédé selon une des revendications 1 à 10, **caractérisé en ce qu'**un message de défaut (28) est délivré et/ou **en ce que** la conduite du fonctionnement (18) de l'éolienne intervient dans le fonctionnement de l'installation et/ou arrête l'éolienne si un écart à la valeur estimative à la vitesse du vent mesurée dépasse un montant absolu défini et/ou si la vitesse du vent mesurée est en dehors de l'intervalle de défauts.

12. Eolienne, avec:
• un dispositif de mesure de la vitesse du vent (16),
• un dispositif de détection d'une contrainte mécanique,
• un dispositif de détermination d'une valeur estimative (24) pour la vitesse du vent à partir de la contrainte mécanique déterminée, et
• un dispositif de comparaison (26) qui est constitué pour comparer la vitesse du vent, mesurée avec le dispositif de mesure de la vitesse du vent (16), avec la valeur estimative.

13. Eolienne selon la revendication 12, **caractérisée en ce que** le dispositif de détection d'une contrainte mécanique est un capteur d'accélération (22).

14. Eolienne selon la revendication 13, **caractérisée en ce que** le capteur d'accélération (22) est disposé dans la nacelle (12) de l'éolienne.

15. Eolienne selon la revendication 13 ou 14, **caractérisée en ce que** le capteur d'accélération (22) est disposé de telle sorte qu'il mesure l'accélération perpendiculairement au plan de rotor de l'éolienne.

16. Eolienne selon une des revendications 12 à 15, **caractérisée en ce que** le dispositif de détermination de la valeur estimative (24) peut effectuer un calcul de la moyenne dans le temps des valeurs de contrainte détectées.

17. Eolienne selon une des revendications 12 à 16, **caractérisée en ce que** le dispositif de détermination de la valeur estimative (24) peut calculer un écart type des valeurs de contrainte détectées, éventuellement rapporté à une période de référence glissante.

18. Eolienne selon une des revendications 12 à 17, **caractérisée en ce que** le dispositif de détermination de la valeur estimative (24) peut prendre en compte des paramètres de fonctionnement ou ambiants supplémentaires.

19. Eolienne selon une des revendications 12 à 18, **caractérisée en ce que**, dans l'éolienne, une relation, spécifique au lieu et/ou spécifique au type d'installation, entre la valeur de contrainte et la vitesse du vent est enregistrée et peut être utilisée par le dispositif de détermination de la valeur estimative (24).

20. Eolienne selon une des revendications 12 à 19, **caractérisée en ce que** le dispositif de détermination de la valeur estimative (24) comprend un dispositif de détermination d'un intervalle de défauts qui peut déterminer un intervalle de défauts pour une valeur estimative déterminée.

21. Eolienne selon la revendication 20, **caractérisée en ce que** le dispositif de détermination de l'intervalle de défauts peut prendre en compte des paramètres supplémentaires.

22. Eolienne selon une des revendications 12 à 21, **caractérisée en ce que** le dispositif de comparaison (26) peut délivrer un message de défaut (28) et/ou **en ce que** la conduite du fonctionnement (18) de l'éolienne peut intervenir dans le fonctionnement de l'installation et/ou **en ce que** l'éolienne peut être arrêtée si le dispositif de comparaison (26) constate qu'un écart de la valeur estimative à la vitesse du vent mesurée dépasse un montant absolu défini et/ou si la vitesse du vent mesurée est en dehors de l'intervalle de défauts.
